**Europäisches Patentamt**

**European Patent Office**

**Office européen des brevets**

(19)

(11) Veröffentlichungsnummer: **0 090 292**
**A2**

(12) # EUROPÄISCHE PATENTANMELDUNG

(21) Anmeldenummer: **83102718.0**

(22) Anmeldetag: **18.03.83**

(51) Int. Cl.³: **G 06 F 3/037**

(30) Priorität: **25.03.82 DE 3210893**

(43) Veröffentlichungstag der Anmeldung: **05.10.83**
**Patentblatt 83/40**

(84) Benannte Vertragsstaaten: **AT DE FR GB**

(71) Anmelder: **International Standard Electric Corporation, 320 Park Avenue, New York New York 10022 (US)**

(84) Benannte Vertragsstaaten: **FR GB AT**

(71) Anmelder: **Standard Elektrik Lorenz Aktiengesellschaft, Hellmuth-Hirth-Strasse 42, D-7000 Stuttgart 40 (DE)**

(84) Benannte Vertragsstaaten: **DE**

(72) Erfinder: **Schepers, Charles, Reickertstrasse 8, D-7500 Karlsruhe 41 (DE)**
Erfinder: **Schroeder, Wolfgang, Allensteiner Strasse 13, D-7530 Pforzheim (DE)**

(74) Vertreter: **Pohl, Heribert, Dipl.-Ing et al, Standard Elektrik Lorenz AG Patent- und Lizenzwesen Kurze Strasse 8 Postfach 300 929, D-7000 Stuttgart 30 (DE)**

(54) Gerätekombination von Geräten der Unterhaltungselektronik mit einem Fernsehempfangsgerät und einem Videoaufnahme- und/oder -wiedergabegerät.

(57) Um die Zusammenschaltung eines handelsüblichen Fernsehempfangsgerätes (1) mit einem handelsüblichen Videorecorder (3) oder Videoplattenspieler zusätzlich auch als Home-Computer benutzen zu können, ist in dem Fernsehempfangsgerät zusätzlich ein Daten- und Addressenbus (32) vorgesehen, an den ein Prozessorbaustein (30), ein Rechnerbaustein (33), ein Datenspeicher (34) und ein Zeichengenerator (35) angeschlossen sind. Eine Computersteuerschaltung (41) schaltet die Gerätekombination in einen Computerbetriebszustand, in dem die Ablenkschaltung (40) und die Videosignalverstärkerschaltung (6) für die Bildröhre (7) an den Ausgang des Zeichengenerators geschaltet sind und die Aufnahme- und Wiedergabeleitungen (21) des Videorecorders oder Videoplattenspielers über eine Umcodierschaltung (42) an den Daten- und Addressenbus (32) geschaltet sind. Das vom Benutzer an einer Tastatur (10) oder mit einem Lichtgriffel (26) ausgewählte Benutzerprogramm (44) wird vom Videoband (43) oder der Videoplatte in den Datenspeicher eingespeichert. Der Dialog mit dem Benutzer erfolgt während des Ablaufes des ausgewählten Benutzerprogrammes über den Bildschirm (36) des Fernsehempfangsgerätes und die Tastatur (10) oder den Lichtgriffel. Mit einer zusätzlichen Schaltungseinrichtung im Fernsehempfangsgerät, die wesentlich geringer ist als ein zusätzlicher Home-Computer, erhält die viel verwendete Gerätekombination der Unterhaltungselektronik eine vollwertige und hochflexible Home-Computerfunktion.

Gerätekombination von Geräten der Unterhaltungselektronik mit einem Fernsehempfangsgerät und
einem Videoaufnahme- und/oder -wiedergabegerät


Die Erfindung betrifft eine Gerätekombination der im Oberbegriff des Patentanspruches 1 angegebenen Art. Eine derartige Gerätekombination ist beispielsweise durch die Zusammenschließung eines handelsüblichen Fernsehempfangsgerätes,
das einen Videotextdetektor enthält und von einen von dem
Fernsehempfangsgerät abgesetzten Fernbedienungsgerät bedient werden kann, mit einem handelsüblichen Videorecorder
bekannt. Das Fernbedienungsgerät bildet zusammen mit einem
Fernbedienungsempfänger im Fernsehempfangsgerät eine Eingabeeinrichtung, die an eine Fernsehersteuerschaltung des
Fernsehgerätes angeschlossen ist. Diese Steuerschaltung
stellt aufgrund der Eingabebefehle die gewünschten Betriebszustände des Fernsehempfangsgerätes ein oder gibt bei
VCR-Einstellung am Fernbedienungsgerät die Steuerbefehle
für das VCR-Gerät auf einen Steuerbus, der über eine Stekkereinrichtung mit dem entsprechenden Steuerbus des Videorecorders (VCR-Gerät) in Verbindung steht. Der Videotextdetektor des handelsüblichen Fernsehempfangsgerätes enthält
einen Daten- und Addressen-Bus über den die von der eigentlichen Detektorschaltung aus dem FBAS-Signal ausgesiebten
Videotext-Informationen in den Seitenspeicher des Videotextdecoders gelangen. An diesen Seitenspeicher ist ein
Zeichengenerator angeschlossen, der die im Seitenspeicher gespeicherte Information in auf dem Bildschirm des Fernsehempfangsgerätes darstellbare Zeichen umsetzt. Sowohl der
Videotextdecoder als auch der Videorecorder werden bei dieser bekannten Gerätekombination jeweils von einer Steuerschaltung gesteuert, die an den Steuerbus angeschlossen ist.

Mit der bekannten Gerätekombination von handelsüblichen Geräten der Unterhaltungselektronik kann eine von einem Sender ausgestrahlte Sendung empfangen und unmittelbar auf dem
Bildschirm wiedergegeben und/oder auf das Speichermedium
(Videoband) des Videorecorders aufgezeichnet werden. Die
auf dem Videoband aufgezeichnete Sendung kann dann zu einem
späteren Zeitpunkt auf dem Bildschirm des Fernsehempfangsgerätes wiedergegeben werden. Außerdem besteht die Möglichkeit, mit dem Videodetektor am Fernbedienungsgerät ausgewählte Videotextseiten zu empfangen, im Videotext-Seitenspeicher zu speichern und auf dem Bildschirm des Fernsehempfangsgerätes darzustellen.

Der Erfindung liegt die Aufgabe zugrunde, das Fernsehempfangsgerät einer eingangs angegebenen Gerätekombination
handelsüblicher Geräte der Unterhaltungselektronik so auszugestalten, daß diese Gerätekombination zusätzlich als
Home-Computer benutzt werden kann.

Diese Aufgabe wird nach der Erfindung durch die im kennzeichnenden Teil des Patentanspruches 1 angegebenen technischen Maßnahmen gelöst. Durch diese Maßnahmen wird mit
einer verhältnismäßig geringfügigen zusätzlichen Einrichtung des Fernsehempfangsgerätes dem Benutzer einer derartigen Gerätekombination eine sehr flexible Home-Computeranlage geboten, die die Benutzungsvielfalt einer derartigen Gerätekombination wesentlich erweitert. Im Vergleich
zu den handelsüblichen Home-Computeranlagen ist der zusätzlich hierfür erforderliche Aufwand äußerst gering. Außerdem weisen die Speichermedien der an das Fernsehempfangsgerät anschließbaren Videoaufnahme- und/oder -wiedergabegeräte, wie Videorecorder oder Bildplattengeräte, eine sehr große, für den Home-Computerbetrieb geeignete Speicherkapazität auf.

Die Unteransprüche kennzeichnen vorteilhafte Ausgestaltungen und Weiterbildung/der Erfindung.

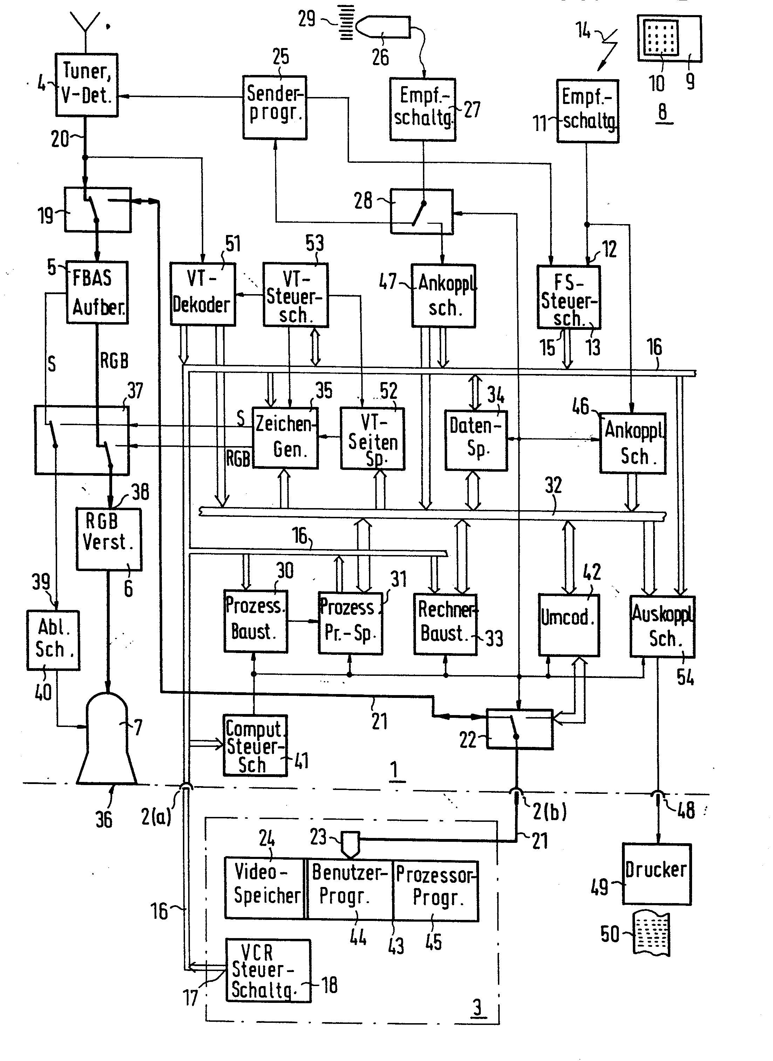

Die Erfindung wird nachfolgend anhand von vorteilhaften Ausführungsbeispielen näher erläutert. In der einzigen Figur der zugehörigen Zeichnung ist eine erfindungsgemäße Gerätekombination in einem Blockschaltbild dargestellt. Die Gerätekombination enthält ein Fernsehempfangsgerät 1, an dessen Aufnahme- und Wiedergabe-Steckereinrichtung 2 als Videoaufnahme- und/oder -wiedergabegerät ein Videorecorder 3 angeschlossen ist..Das Fernsehempfangsgerät enthält eine HF-Empfangsschaltung 4, eine Farbsignal-Aufbereitungsschaltung 5 und eine Videosignalverstärkerschaltung 6 zur Verstärkung der RGB-Signale für die Bildröhre 7.

Außerdem enthält das Fernsehempfangsgerät eine Eingabeeinrichtung 8, die aus einem vom Fernsehempfangsgerät abgesetzten Fernbedienungsgerät 9 mit einer Eingabetastatur 1o und einer Fernbedienungs-Empfangsschaltung 11 besteht. Der Ausgang dieser Empfangsschaltung 11 ist mit einem Eingang 12 einer Fernseher-Steuerschaltung 13 verbunden. Mittels der drahtlos vom Fernbedienungsgerät 9 auf die Empfangsschaltung 11 übertragenen Eingabesignale 14 setzt die Fernseher-Steuerschaltung 13 das Fernsehempfangsgerät 1 in den gewünschten Betriebszustand, z.B. durch Einstellung des gewünschten Empfangskanals an der HF-Empfangsschaltung 4. Wird mittels der Eingabeeinrichtung 8 das an das Fernsehempfangsgerät1 angeschlossene VCR-Gerät 3 angesteuert, gelangen die entsprechenden Eingabesignale 14 über den Busausgang 15 der Fernseher-Steuerschaltung 13 auf den Steuerbus 16 und von dort über den Steckerteil 2a der Steckereinrichtung 2 an den Busanschluß 17 einer Steuerschaltung 18 des VCR-Gerätes. Die Steuerschaltung 18 des VCR-Gerätes stellt entsprechend der Eingabesignale 14 den mit diesen Eingabesignalen gewählten Betriebszustand des VCR-Gerätes ein. Gleichzeitig wird in diesem Betriebszustand von der Fernseher-Steuerschaltung 13 durch Umschalten einer FBAS-Umschalteinrichtung 19 im Videosignalweg 2o des Fernsehempfangsgerätes der Eingang der Farbsignal-Aufbereitungsschaltung 5 an die Aufnahme- oder Wiedergabeleitungen 21 zum VCR-Gerät 3 geschaltet. Diese Leitungen 21 führen über einen Signalwegumschalter 22 und einen Steckerteil 2b der Aufnahme- und Wiedergabe-Steckereinrichtung 2 des Fernsehempfangsgerätes zur Aufzeichnungs- und Abtastvorrichtung 23 für das Speichermedium (Videoband) 24 des VCR-Gerätes.

Im dargestellten Ausführungsbeispiel enthält das Fernsehempfangsgerät 1 außerdem eine Senderprogrammeinrichtung 25, in der die Daten einzelner vom Benutzer ausgewählter Senderprogramme gespeichert sind. Zur Einspeicherung dieser Daten enthält das Fernsehempfangsgerät einen Lichtgriffel 26, der über eine Lichtgriffel-Empfangsschaltung 27 und einen Umschalter 28 an die Senderprogrammeinrichtung 25 angeschlossen ist. Mit dem Lichtgriffel 26 wird eine Balkenschrift 29 abgetastet, die die Kenndaten des ausgewählten Senderprogrammes enthält.

Um die aus dem Fernsehempfangsgerät 1 und dem VCR-Gerät 3 bestehende Gerätekombination auch als Home-Computer benutzen zu können, enthält das Fernsehempfangsgerät die folgenden zusätzlichen Schaltungsanordnungen: einen Prozessorbaustein 3o, der an den Steuerbus 16 angeschlossen ist und den schrittweisen Prozessablauf eines Benutzerprogrammes steuert, einen Prozessorprogrammspeicher 31, dessen gespeichertes Prozessorprogramm unmittelbar den einzelnen Prozessschritten des Prozessor-Bausteines 3o zugeordnet ist und die Programmsprache für den Programmablauf des Prozessor-Bausteines festlegt und mit seinen Busausgängen an den Steuerbus 16 und an einen Daten- und Addressenbus 32 angeschlossen ist, einen ebenfalls an den Steuerbus und den Daten- und Addressenbus angeschlossenen Rechnerbaustein 33 für die bei einem Home-Computer erforderlichen Rechen- und Vergleichsoperationen, einen an den Daten-und Addressenbus 32 und den Steuerbus 16 angeschlossenen Datenspeicher 34 zur Speicherung der Daten eines Benutzerprogrammes und der während der Rechen- und Vergleichsoperationen anfallenden Daten und Informationen, einen an den Steuerbus 16 und den Daten- und Addressenbus 32 angeschlossenen Zeichengenerator 35, der an seinem Dateneingang anliegende Zeichen in auf dem Bildschirm 36 der Bildröhre 7 visuell lesbare Zeichen und Symbole umwandelt, eine RGB-Umschalteinrichtung 37, die im Computer-Betriebszustand des Fernsehempfangsgerätes die RGB-Eingänge 38 der der Videosignalverstärkerschaltung 6 und den Synchroneingang 39 der Ablenkschaltung 4o mit den Ausgängen des Zeichengenerators 35 verbindet, und eine an den Steuerbus 16 angeschlossene Computersteuerschaltung 41, die bei einem Computer-Schaltsignal beispielsweise vom Fernbedienungsgerät 9 des Fernsehempfangsgerätes die Gerätekombination in dem Computer-Betriebszustand schaltet.

Im dargestellten Ausführungsbeispiel wird die Gerätekombination 1/3 durch einen am Fernbedienungsgerät 9 ausgelösten Steuerbefehl, der über die Fernseher-Steuerschaltung 13 auf den Steuerbus 16 gelangt und über diesen Steuerbus die Com-putersteuerschaltung 41 einschaltet, in den Computerzustand gesteuert. In diesem Zustand sind die Bausteine und Schal-tungsanordnungen 3o-35 eingeschaltet. Außerdem sind die Aufnahme- und Wiedergabeleitungen 21 des Videorecorders mittels des Signalwegumschalters 22 an eine Umcodierschal-

tung 42 angeschlossen, der den Code der auf dem Videoband 24 gespeicherten Zeichen in einen für die Datenübertragung auf dem Daten- und Addressenbus 32 geeigneten Code umwandelt und umgekehrt. Ferner sind die RGB- und Synchroneingänge der Videosignalverstärkerschaltung 6 und der Ablenkschaltung 4o über die RGB-Umschalteinrichtung 37 mit den Ausgängen des Zeichengenerators 35 verbunden. In das VCR-Gerät 3 ist ein Videoband mit gespeicherten Benutzerprogrammen 44 und gegebenenfalls gespeicherten Prozessorprogrammen 45 eingelegt. In den ersten Programmschritten des Prozessorbausteines wird das VCR-Gerät 3 mittels Steuerbefehlen und Informationen über den Steuerbus veranlaßt, das für die Datenverarbeitung des Fernsehempfangsgerätes 1 erforderliche Prozessorprogramm 45 auf dem Speichermedium 43 aufzusuchen und in den Prozessorprogrammspeicher 31 einzuspeichern, wenn dieser Prozessorprogrammspeicher 31 in einer besonders vorteilhaften Ausgestaltung der Gerätekombination nicht bereits schon mit einem Prozessorprogramm fest und unlöschbar programmiert ist. Danach wird der Benutzer in einer weiteren vorteilhaften Ausbildung der dargestellten Gerätekombination durch eine Anzeige auf dem Bildschirm 36 aufgefordert, das gewünschte Benutzerprogramm auszuwählen. Diese Auswahl kann beispielsweise durch Eingabe einer Kennziffer in die Tastatur 1o des Fernbedienungsgerätes 9 erfolgen, die z.B. anhand einer Programmtabelle festgestellt wird. Diese Daten gelangen von Ausgang der Empfängerschaltung 11 über eine Ankoppelschaltung 46 auf den Daten- und Addressenbus 32 und von dort beispielsweise in den Datenspeicher 34. Die Ankoppelschaltung setzt im Computer-Betriebszustand des Fernsehgerätes Zeichen am Ausgang der Empfängerschaltung 11 in den auf dem Daten- und Addressenbus 32 verwendeten Zeichencode um. Die Ankoppelschaltung 46 ist nur so lange an den Daten- und Addressenbus 32 angeschaltet, so lange Daten über die Eingabeeinrichtung 8 angefordert werden. Das gleiche gilt auch für eine Ankoppel-schaltung 47, die den Ausgang der Lichtgriffel-Empfangs-schaltung 27 an die Busse 16 und 23 ankoppelt. Nach Ab-schluß der Dateneingabe gelangen diese Daten aus dem Daten-speicher 34 als Auswahlinformationen über den Steuerbus 16 in das VCR-Gerät 3, wodurch das zugehörige Benutzerprogramm 44 auf dem Videoband 43 aufgesucht und über die Aufzeich-nungs- und Abtastvorrichtung 23 und die Umcodierschaltung 42 in den Datenspeicher 34 eingespeichert wird.

In einer anderen Ausbildung der in der Zeichnung dargestell-ten Gerätekombination werden die Befehls- und Auswahldaten für ein von dem Benutzer in einen Programmkatalog ausgewählten Benutzerprogramm mit den Lichtgriffel 26 des Fernsehempfangsgerätes abgetastet. Dazu enhält der Programmkata-log bei jedem Benutzerprogramm die zugehörigen Daten in einer Balkencodeschrift ausgedruckt, die mit dem Lichtgriffel überfahren wird. In einer anderen Ausbildung der dargestell-ten Gerätekombination ist es auch möglich, ein in einer Bal-kencodeschrift in einém Programmkatalog oder Programmhand-buch aufgezeichnetes Benutzerprogramm geringen Umfanges mittels des Lichtgriffels 26 unmittelbar in den Datenspeicher 34 des Fernsehempfangsgerätes zu übertragen. In beiden Fäl-len verbindet der Umschalter 28 den Ausgang der Lichtgriffel-Empfangsschaltung 27 mit dem Eingang der Ankoppelschaltung 47.

Nach diesen Einspeichervorgängen erfolgt der vom Prozessor-Baustein 30 gesteuerte Programmablauf für das eingespeicher-te Benutzerprogramm, gegebenenfalls im Dialog mit dem Be-nutzer. Dazu werden beispielsweise die erforderlichen Be-nutzerschritte auf dem Bildschirm 36 angezeigt, die der Benutzer dann mittels des Lichtgriffels 26 oder der Tastatur 10 der Eingabeeinrichtung 8 durchführen muß. Nach Abschluß

des Ablaufes des gewählten Benutzerprogrammes kann das gesamte Benutzerprogramm oder zugehörige neue Daten wieder auf dem Videoband 43 abgespeichert werden. Die abzuspeichernden Daten gelangen vom Datenspeicher 34 über den Daten- und Addressenbus 32 und über die Umcodierschaltung 42 zur Abtast- und Aufzeichnungsvorrichtung 23 des VCR-Gerätes 3 und werden an der über den Steuerbus 16 gesteuerten vorgesehenen Stelle des Videobandes 43 in das Videoband eingespeichert.

In einer besonderen Ausbildung der dargestellten Gerätekombination enthält das Fernsehempfangsgerät 1 eine Steckereinrichtung 48 für einen Drucker 49 der über eine vom Steuerbus gesteuerte Auskoppelschaltung 54 an den Daten- und Addressenbus 32 angeschlossen ist und die während des Ablaufs des ausgewählten Benutzerprogrammes anfallenden Daten auf einen Papierstreifen 50 ausdruckt.

Weist das Fernsehempfangsgerät 1 einer in der Zeichnung dargestellten Gerätekombination eine Videotext-Einrichtung mit einem Videotextdecoder 51, einen Seitenspeicher 52 mit einem daran angeschlossenen Zeichengenerator auf, der von einer Videotext-Steuerschaltung 53 gesteuert wird, dann kann diesen Zeichengenerator einschließlich des ihm vorgeschalteten Seitenspeichers als Zeichengenerator 35 für die Computereinrichtung und der Daten- und Addressenbus der Videotext-Einrichtung als Daten- und Addressenbus 32 der Computereinrichtung des Fernsehempfangsgerätes verwendet werden. In diesem Fall ist der Zeichengenerator nicht direkt an den Daten- und Addressenbus 32 angeschlossen, sondern über den Seitenspeicher 52.

Die Daten, Steuer- und Addressenbefehle können jeweils auf getrennten dafür vorgesehenen Bussystemen übertragen werden, oder mit einem Artkennzeichen auf einem gemeinsamen Bussystem ausgetauscht werden.

0090292

Ch. Schepers - W.Schröder 7-85

Patentansprüche

1. Gerätekombination aus Geräten der Unterhaltungselektronik
   a) mit einem Fernsehempfangsgerät, das
   - einen Steuerbus für Steuerbefehle und Auswahlinformationen,
   - eine Eingabeeinrichtung mit einer Tastatur,
   - eine an den Steuerbus angeschlossene Fernsehersteuerschaltung zur Einstellung der mit der Eingabeeinrichtung gewählten Betriebszustände des Fernsehempfangsgerätes,
   - einen Daten- und Addressenbus mit einem daran angeschlossenen Datenspeicher und
   - einen wahlweise an den Eingang einer Videosignalverstärkerschaltung für die Bildröhre anschließbaren Zeichengenerator enthält, und
   b) mit einem an eine Aufnahme-/Wiedergabe-Steckereinrichtung des Fernsehempfangsgerätes angeschlossenen, ein auswechselbares, abtastbares Speichermittel für Videoinformationen enthaltendes Videoaufnahme- und -wiedergabegerät,
   - dessen Steuerschaltung zur Einstellung seines Betriebszustandes über die Aufnahme-/Wiedergabe-Steckereinrichtung an den Steuerbus des Fernsehempfangsgerätes angeschlossen ist und

ZT/P2-lr/fö
o8. März 1982

- dessen Videoinformationsein- und ausgang über die Aufnahme-/Wiedergabe-Steckereinrichtung an den Videosignalweg des Fernsehempfangsgerätes angeschlossen ist,

  dadurch gekennzeichnet,

c) daß in dem über die Aufnahme-/Wiedergabe-Steckereinrichtung (2) des Fernsehempfangsgerätes (1) führenden Videosignalweg (21) des Aufnahme- und/oder Wiedergabegerätes (3) ein Signalwegumschalter (22) angeordnet ist, der in einem ersten Schaltzustand diesen Signalweg an den Videosignalweg (2o) des Fernsehempfangsgerätes anschließt und der in einem zweiten Schaltzustand den Videosignalweg des Aufnahme- und/oder Wiedergabegerätes über eine Umcodierschaltung (42) an den Daten- und Addressenbus (32) anschließt,

d) daß an den Steuerbus (16) eine Computersteuerschaltung (41) angeschlossen ist, die bei einem Computerschaltbefehl am Ausgang der Eingabeeinrichtung (8) oder der Fernsehersteuerschaltung (13) das Fernsehempfangsgerät in einen Computerbetriebszustand schaltet,

e) daß das Speichermittel (43) des Videoaufnahme- und/oder -wiedergabegerätes (3) wenigstens ein auswählbares Benutzerprogramm (44) enthält und

f) daß im Computerbetriebszustand des Fernsehempfangsgerätes

  - der Eingang (38) der Videosignalverstärkerschaltung (6) an den Ausgang des Zeichengenerators (35) angeschlossen ist,

  - ein Prozessorbaustein (3o) und ein Rechnerbaustein (33) an den Steuerbus (16) und den Daten- und Addressenbus (32) angeschlossen ist,

  - der Signalwegumschalter in den zweiten Schaltzustand geschaltet ist und

- die Datenausgänge der Eingabeeinrichtung über eine
  Ankoppelschaltung (46) an den Daten- und Adressenbus geschaltet sind,

2. Gerätekombination nach Anspruch 1, g e k e n n -
   z e i c h n e t   d u r c h   eine Eingabeeinrichtung
   (27) mit einem Lichtgriffel (26) zum optischen Abtasten einer Balkencodeschrift (29),

3. Gerätekombination nach Anspruch 2, d a d u r c h
   g e k e n n z e i c h n e t, daß der Lichtgriffel (26)
   ein Bestandteil einer Speichereinrichtung (25) des
   Fernsehempfangsgerätes (1) zur Speicherung von mit dem
   Lichtgriffel abgetasteter Senderprogrammdaten ist, daß
   zwischen dem Lichtgriffel und der Speichereinrichtung
   ein Umschalter (28) angeordnet ist und daß der Lichtgriffel im Computerbetriebszustand des Fernsehempfangsgerätes über den Umschalter an den Einang einer Ankoppelschaltung (47) angeschlossen ist, deren Ausgänge
   am Bussystem (16, 32) liegen.

4. Gerätekombination nach einem der Ansprüche 1 bis 3,
   d a d u r c h   g e k e n n z e i c h n e t, daß der
   Prozessorbaustein (30) einen einschreibbaren Prozessorprogrammspeicher (31) aufweist und daß das zugehörige
   Prozessorprogramm (45) für den Prozessorbaustein auf
   dem das wenigstens ein Benutzerprogramm (44) enthaltenden Speichermittel (43) des Videoaufnahme und/oder
   -Wiedergabegerätes (3)  anwählbar gespeichert ist.

5. Gerätekombination nach einem der Ansprüche 1 bis 4,
   d a d u r c h   g e k e n n z e i c h n e t, daß ein
   Drucker (49) über eine Auskopplungsschaltung (54) an
   den Daten- und Addressenbus (32) angeschlossen ist.

6.  Gerätekombination nach einer der Ansprüche 1 bis 5,
    dessen Fernsehempfangsgerät eine Videotext- oder Bild-
    schirmtexteinrichtung enthält, d a d u r c h   g e -
    k e n n z e i c h n e t, daß der Zeichengenerator (35)
    und der Daten- und Addressenbus (32) Bestandteile der
    Videotexteinrichtung oder Bildschirmtexteinrichtung
    sind.

0090292

Tuner, V-Det. — 4
Sender-progr. — 25
Empf.-schaltg. — 27 — 26 — 29
Empf.-schaltg. — 11 — 14
10   9
8

20
19
FBAS Aufber. — 5
VT-Dekoder — 51
VT-Steuer-sch. — 53
Ankoppl. sch. — 47
FS-Steuer-sch. — 12
28

S   RGB   15   13   16

37
Zeichen-Gen. — 35
VT-Seiten Sp. — 52
Daten-Sp. — 34
Ankoppl. Sch. — 46
S   RGB   32

RGB Verst. — 38 — 6
16
Prozess. Baust. — 30
Prozess Pr.-Sp. — 31
Rechner Baust. — 33
Umcod. — 42
Auskoppl. Sch. — 54

39
Abl. Sch. — 40
7
Comput. Steuer-Sch — 41
21
22

36   2(a)   1   2(b)   48   21

Video-Speicher — 24
Benutzer-Progr. — 23
Prozessor-Progr.
44   43   45

16
VCR Steuer-Schaltg. — 18
17
Drucker — 49
50
3